# EUROPEAN PATENT APPLICATION

(11) **EP 1 343 234 A1**
(43) Date of publication of application: **10.09.2003**
(21) Application number: 03004357.4
(22) Date of filing: 03.03.2003
(51) Int. Cl.: H02G 1/08, B65H 57/12

(54) **Connector for inserting a draw wire in a conduit, particularly for laying in-wall electrical cables**

(30) Priority: 07.03.2002 IT BO20020113
(71) Applicant: G. BARGELLINI & C. S.p.A., I-40066 Pieve di Cento, Bologna (IT)
(72) Inventor: Bargellini, Giulio, 40066 Pieve di Cento, (Prov. of Bologna) (IT)
(74) Representative: Modiano, Guido, Dr.-Ing.

(57) **Abstract**

A connector for inserting a draw wire (2) in a conduit (3), particularly for laying in-wall electrical cables, comprising an elastically flexible tubular element (26) that forms a longitudinal channel (27) for guiding said draw wire (2) and is suitable for anchoring to the inlet (28) of said conduit (3).

## Description

The present invention relates to a connector for inserting a draw wire in a conduit, particularly for laying in-wall electrical cables.

In the field of the execution and installation of electrical systems in civil and industrial buildings, as regards the laying of electrical cables inside in-wall conduits, the problem of inserting the draw wire for pulling said cables in the inlet of the conduit is particularly felt.

US Patent 3,610,582 describes a manual insertion device with a handgrip provided with draw wire traction elements.

WO95/11540 instead refers to the use of a working head with a bracket for fixing to a wall, for example by means of screws.

A fixing device, known from US Patent 6,003,842, is provided with grasping arms that can expand and are suitable for anchoring to the inlet of the conduit.

Other kinds of device are also known which in any case use complex fixing equipment, making it rather laborious and difficult to insert the draw wire.

Moreover, the operation for laying the electrical cables inside the in-wall conduit usually requires the intervention of at least two operators, located respectively at either end of the conduit.

The aim of the present invention is to obviate the cited drawbacks of conventional devices by providing an insertion connector that allows simple and rapid fixing to the inlet of the conduit.

Within this aim, an object of the present invention is to provide a connector for the insertion of a draw wire in a conduit that allows to use a single operator to lay electrical cables.

Another object of the present invention is to provide an insertion connector that can be fixed to the inlet of the conduit firmly and reliably.

Another object of the present invention is to provide an insertion connector that can be disengaged easily from the inlet of the conduit after the electrical cables have been laid.

Another object of the present invention is to provide an insertion connector that is simple, relatively easy to provide in practice, safe in use, effective in operation, and relatively low in cost.

This aim and these and other objects which will become better apparent hereinafter, are achieved by the present connector for inserting a draw wire in a conduit, particularly for laying in-wall electrical cables, characterized in that it comprises an elastically flexible tubular element that forms a longitudinal channel for guiding said draw wire and is adapted for anchoring to the inlet of said conduit.

Further characteristics and advantages of the present invention will become better apparent from the following detailed description of a preferred but not exclusive embodiment of a connector for the insertion of a draw wire in a conduit, particularly for laying in-wall electrical cables according to the invention, illustrated only by way of non-limitative example in the accompanying drawings, wherein:
Figure 1 is a perspective schematic view of the insertion of a draw wire in a conduit for laying in-wall electrical cables;
Figure 2 is a view of a detail of the insertion connector of the draw wire according to the invention;
Figure 3 is a side elevation view of a device for inserting the draw wire with the connector according to the invention;
Figure 4 is a plan view of the insertion device.

With reference to the figures, the reference numeral 1 generally designates a connector for the insertion of a draw wire 2 in a conduit 3, particularly for laying in-wall electrical cables, according to the invention.

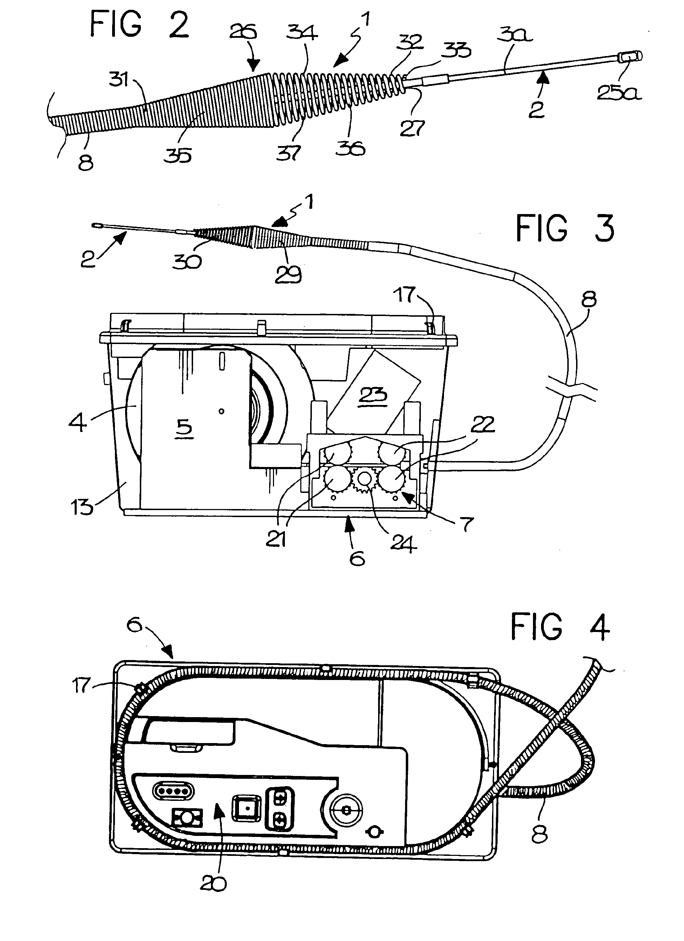

The draw wire 2 is constituted in a known manner by an inextensible cable 3a made of a material with high tensile strength, for example synthetic material; it is wound on a reel 4 that is supported so that it can rotate freely on the housing 5 of a corresponding insertion device 6, and can be actuated by virtue of traction means 7 provided on said device (Figure 3). The draw wire 2 can slide inside a flexible tubular sheath 8, of which the connector 1 is the end part.

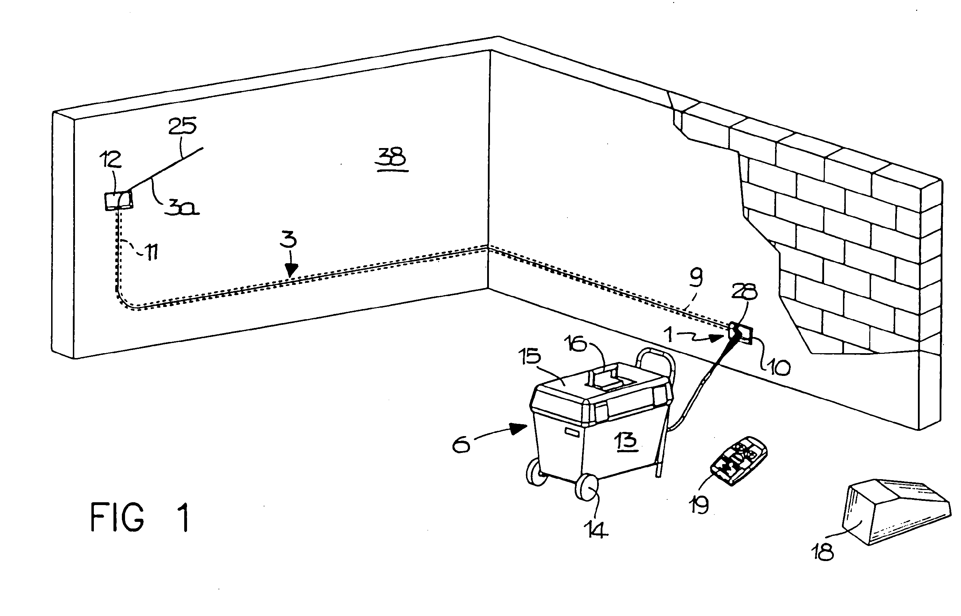

The conduit 3, for example of the type with a corrugated surface arranged inside a wall as part of the execution of a civil or industrial electrical system, is substantially delimited, at a first end 9, by a first junction box 10 and, at a second end 11, by a second junction box 12, both of which are mounted flush in the wall (Figure 1).

The insertion device 6 comprises a container for transport 13, which is provided with wheels 14 and with an upper cover 15 with a handle 16 for placing it in the most appropriate position; the sheath 8 is accommodated below the cover 15, by means of a plurality of perimetric clips 17, and can be extracted partially or completely according to operating requirements (Figures 3 and 4).

The device 6 for inserting the draw wire 2 in the conduit 3 is provided with a corresponding independent electrical power supply with accumulators, to be preset for operation with the aid of a suitable charger 18. The device 6 can be activated by a single remotely located operator by virtue of remote control means, for example with a remote control 19 that interacts with a control unit 20 that is functionally connected to the traction means 7.

The traction means 7 are preferably constituted by two pairs of mutually opposite rollers 21 and 22, which are suitable to draw the cable 3a and can be rotationally actuated by an electric motor 23 with a pinion 24 that is keyed to the output shaft.

The cable 3a has a free end 25 that is provided with an end eye 25a for connection to a bundle of electrical cables to be laid inside the conduit 3, pulled by the draw wire 2 actuated by the device 6.

According to the invention, the connector 1 comprises an elastically flexible tubular element 26, which is affected by a longitudinal channel 27 for guiding the draw wire 2 and is suitable for anchoring to the inlet 28 of the conduit 3 at the first junction box 10 (Figure 2).

The tubular element 26 is constituted by a first portion 29 and by a second portion 30, which are substantially frustum-shaped and coaxial and are mutually connected at their respective larger end faces. In the first frustum-shaped portion 29, the respective smaller end face 31 is rigidly coupled to the sheath 8 of the draw wire 2, while the second frustum-shaped portion 30 has, on the converging section 32, a substantially circular opening 33 for the passage of the draw wire, which is located in the end portion of the longitudinal channel 27.

The first frustum-shaped portion 29 is constituted by a filament 34 made of elastic material, for example steel, that is wound in a first frustum-shaped spiral 35 with substantially compact turns. The second frustum-shaped portion 30 is constituted by the same filament 34, which continues by winding in a second frustum-shaped spiral 36 that has a wider pitch and is suitable for anchoring to the inlet 28 of the conduit 3, by engaging the turns 37 on the rim and on the corrugated internal surface of said conduit.

The filament 34 has, at the second frustum-shaped portion 30, a substantially uniform surface distribution of tooth-like protrusions that are suitable for anchoring to the inlet 28 of the conduit 3.

The longitudinal channel 27 formed by the first and second frustum-shaped spirals 35 and 36 is substantially coaxial to said spirals and is suitable to allow the sliding of the draw wire 2 along the tubular element 26, in an elastically flexed configuration, after anchoring to the inlet 28 of the conduit 3: the conduit in fact runs preferably parallel to the wall 38 and therefore the connector 1 is suitable to flex at an obtuse angle that can closely approximate a right angle.

The method of use of the connector according to the invention is as follows. The device 6 for inserting the draw wire 2 is transported, easily thanks to the presence of the wheels 14, proximate to the first junction box 10; the draw wire is initially wound up entirely on the reel 4. After extracting from the container 13 of the device 6 the sheath 8 for the sliding of the draw wire 2 for the length required to reach the first box 10, the connector is inserted manually, with a moderate pressure, in the inlet 28 of the conduit 3, flexing elastically. The longitudinal channel 27 therefore assumes a curved configuration at a substantially obtuse angle (Figure 1).

The second frustum-shaped portion 30 is accordingly firmly coupled, by friction and by engaging the turns 37 of the second spiral 36 on the rim and on the corrugated internal surface of the conduit 3, to the inlet 28 of said conduit at the first junction box 10. The presence of the tooth-like protrusions on the filament 34 facilitates the retention of the turns 37 of the second frustum-shaped spiral 36 on the internal surface of the channel 3.

At this point the operator can go to the second junction box 12 of the conduit 3, where he has prepared the bundle of electrical cables to be inserted therein. By means of the remote control 19, he can start the device 6, actuating the electric motor 23 that drives the traction means 7: the pairs of rollers 21 and 22 draw the cable 3a, unwinding it from the reel 4 and inserting it by pushing along the conduit 3 over its entire length.

At the end of the unwinding of the draw wire 2, the free end 25 of the cable 3a exits from the second junction box 12: the operator stops the traction means by virtue of the remote control 19, and after reading the length of the unwound cable on a display thanks to the presence of a suitable measurement sensor, he connects the bundle of electrical cables to the eye 25a of the draw wire 2. By means of the remote control 19, the operator restarts the traction means 7, actuating the pairs of rollers 21, 22 so that they rotate in the opposite direction; the draw wire 2 is thus wound back onto the reel 4, drawn along the conduit 3 together with the bundle of electrical cables. If, for example due to jamming of the electrical cables along the conduit 3, the traction rollers 21, 22 slip on the cable 3a without winding it onto the reel 4, a safety device intervenes to stop the electric motor 23.

Once the draw wire 2 is fully wound back onto the reel 4, the free end 25 of the cable 3a is located, together with the bundle of electrical cables, at the first junction box 10. The operator can therefore disengage the connector 1 from the inlet 28 of the conduit 3, pulling out the end of said bundle.

The connector according to the invention allows to insert the draw wire 2 along the conduit 3 in a particularly simple, quick and reliable manner, anchoring firmly to the inlet 28 of said conduit with an easy manual operation: the insertion device 6 therefore does not require additional equipment for fixing to the junction box 10.

Moreover, the laying of electrical cables in the conduit 3 requires the intervention of a single operator when using the connector of appended claims.

It has thus been shown that the invention achieves the intended aim and objects.

The invention thus conceived is susceptible of numerous modifications and variations, all of which are within the scope of the inventive concept.

All the details may further be replaced with other technically equivalent elements.

In practice, the materials used, as well as the shapes and the dimensions, may be any according to requirements without thereby abandoning the scope of the appended claims.

The disclosures in Italian Patent Application No. BO2002A000113 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A connector for inserting a draw wire (2) in a conduit (3), particularly for laying in-wall electrical cables, **characterized in that** it comprises an elastically flexible tubular element (26) that forms a longitudinal channel (27) for guiding said draw wire (2) and is suitable for anchoring to the inlet (28) of said conduit (3).

2. The connector according to claim 1, **characterized in that** said tubular element (26) is constituted by a first portion (29) and by a second portion (30), which are substantially frustum-shaped and coaxial and connected at the respective larger end faces.

3. The connector according to claims 1 and 2, **characterized in that** the smaller end face (31) of said first portion (29) is connected to a flexible tubular sheath (8) for said draw wire (2), and **in that** the smaller end face of said second portion (30) has a substantially circular opening (33) for the passage of said draw wire.

4. The connector according to one or more of the preceding claims, **characterized in that** said first portion (29) is constituted by a filament (34) made of elastic material, which is wound in a first frustum-shaped spiral (35) with substantially compact turns (37).

5. The connector according to one or more of the preceding claims, **characterized in that** said second portion (30) is constituted by said filament (34), wound in a second frustum-shaped spiral (36) that has a wider pitch and is suitable for anchoring to said inlet (28) by means of the engagement of said turns (37) on the rim and on the corrugated inner surface of said conduit (3).

6. The connector according to one or more of the preceding claims, **characterized in that** said filament (34) has, at said second frustum-shaped portion (30), a substantially uniform surface distribution of tooth-like protrusions that are suitable for anchoring to said inlet (28) of said conduit (3).

7. The connector according to one or more of the preceding claims, **characterized in that** said longitudinal guiding channel (27) is substantially coaxial to said first and second spirals (35, 36), said channel (27) being suitable to allow the sliding of said draw wire (2) when said tubular element (26) is in an elastically flexed configuration after anchoring to said inlet (28) of said conduit (3).
